# EUROPEAN PATENT APPLICATION

(11) **EP 3 777 545 A1**
(43) Date of publication of application: **17.02.2021**
(21) Application number: 18913002.4
(22) Date of filing: 28.09.2018
(51) Int. Cl.: A23D 7/005, A23D 7/02, A23L 29/00

(54) **FAT COMPOSITION**

(30) Priority: 28.03.2018 JP 2018060997
(71) Applicant: Fuji Oil Holdings Inc., Izumisano-shi, Osaka 598-8540 (JP)
(72) Inventor: MIZUSHIMA, Shigeki, Izumisano-shi, Osaka 598-8540 (JP)
(74) Representative: Boult Wade Tennant LLP
(86) International application number: PCT/JP2018/036445
(87) International publication number: WO 2019/187242

(57) **Abstract**

The purpose of the present invention is to provide an ascorbic acid-containing fat in which the ascorbic acid content of the ascorbic acid-containing fat is increased, and which can be used in any food products and can be applied in a wide range of concentrations. This fat composition contains 50-50,000 ppm of ascorbic acid, and contains a specific amount of water relative to the ascorbic acid content.

## Description

### Technical Field

The present invention relates to a fat composition in which fat-insoluble ascorbic acid is stably dispersed in a wide range of concentration.

### Background Art

Due to increasing social concern about health problems such as aging society, and increase in medical costs, there is needed to provide products for health, and there has been a similar demand for a fat which is indispensable to food cooking.

Fat is known to deteriorate similarly to other substances. For example, peroxide substances produced due to oxidization of fat may impair not only flavor but also human health. Therefore, fat for health may be provided by preventing oxidization.

Meanwhile, although the "Dietary Reference Intakes for Japanese (2005)" describes that sodium chloride intake required by an adult per day is approximately 1.5 g, in the result of recent Japanese national nutrition survey, it is reported that Japanese take approximately 10 to 12 g of excessive sodium chloride per day, and this is excessive intake of sodium chloride. Intake of sodium chloride closely relates to lifestyle diseases such as heart disease and hypertension. Fat that enhances salty taste leads to decrease in the sodium chloride intake, and such fat may be said to have a consideration for health.

Regarding fat in which ascorbic acid is dispersed, Patent Document 1 describes an effect of preventing oxidization, and Patent Document 2 describes that ascorbic acid-containing fat has an effect of enhancing salty taste.

As a technique of allowing ascorbic acid to be contained at a high concentration in fat, Patent Document 4 shows a fat-insoluble antioxidant composition having improved solubility in fat obtained by a method including dissolving the antioxidant that is insoluble in fat and readily soluble in alcohol in alcohol, and then obtaining a mixed solution by dissolving the alcohol solution in di- or tri-basic acid ester of monoglyceride, and then further dissolving the solution in polyglycerol condensed ricinoleic acid ester. Patent Document 4 exemplifies ascorbic acid as the antioxidant that is insoluble in a fat and readily soluble in alcohol.

Also, Patent Document 5 discloses a method of producing fat containing organic acid and/or salts thereof, the method including adding the organic acid and/or salts thereof in the form of powder to fat, and stirring them under the condition of 100 to 190°C and 0.5 to 100 Torr (0.067 to 13.33 kPa), followed by filtration. Patent Document 3 discloses, particularly as a method for improving oxidative stability of highly unsaturated fatty acid-containing fat, a method of adding salts of organic acid such as ascorbic acid as a water-in-oil type emulsion to fat.

### Prior Art Documents

### Patent Documents

Patent Document 1: WO 2001/096506
Patent Document 2: WO 2011/102477
Patent Document 3: JP H09-235584 A
Patent Document 4: JP 2001-131572 A
Patent Document 5: JP 2012-201771 A

### Summary of Invention

### Problems to be Solved by the Invention

There is considerably high concern about the effect of preventing oxidization by ascorbic acid and the effect of enhancing salty taste disclosed in Patent Documents 1 and 2, and wide supply of fats containing ascorbic acid has been desired.

Patent Documents 1 and 2 describe that the amount of ascorbic acid blended in fat is limited to several tens ppm. When ascorbic acid-containing fat having such a concentration is used, a large amount needs to be blended in foods to exert the effect of the ascorbic acid-containing fat, and thus oil and fat components increase in some cases. This arises the problem of increasing in limitation on food design. Further, when fat is used for an oily food containing a relatively large amount of fat, the concentration of ascorbic acid is diluted with other fats contained in the food, and thus a desired effect cannot be obtained in some cases.

Thus, it is conceived that when the content of ascorbic acid in ascorbic acid-containing fat is improved, the effect of ascorbic acid-containing fat may be enlarged in a wide range of foods, leading to expectation to contribute to common health.

Further, since the range of content of fat contained in foods is wide as described above, if ascorbic acid-containing fat that is allowed to be adapted for a wide range of concentration would be available in various foods.

In a case where ascorbic acid cannot be stably dispersed in fat, as a result of which precipitation occurs, not only the function required for ascorbic acid-containing fat decreases, but also the precipitation part has a strong sour taste and thus exhibits inferior eating quality. Even in a case where ascorbic acid is dispersed at a high concentration, it is important to be a fat composition that does not cause precipitation and ensures stable dispersion. Thus, also in foods using such an ascorbic acid-containing fat composition, the ascorbic acid-containing fat composition is required to be easily stably dispersed.

Focusing on the conventional art regarding improvement of the content of ascorbic acid in ascorbic acid-containing fat, in Patent Documents 1 and 2, the amount of ascorbic acid blended in fat is limited to several tens ppm as described above. In particular, there is described "when a content of greater than 28 ppm of an organic acid is added to fat, the crystal of organic acid precipitates, and it is difficult to allow the organic acid to be contained in the fat". It has been therefore difficult to allow ascorbic acid to be contained at a high concentration.

Patent Document 3 is a technique of dispersing an aqueous solution of an antioxidant in oil; however, the ascorbic acid content in oil at 6,000 ppm is evaluated as being poor dispersibility. Further, also in examples other than the above description, long-term preservation and presence or absence of precipitation are not evaluated. Such a technique is therefore not considered to be adapted for fat distributed for a long period of time (for example, one year at normal temperature). When an ascorbic acid aqueous solution having poor storage stability is blended in fat a precipitation is occurred, and a function of ascorbic acid is impaired. In this method, ascorbic acid is added as an aqueous solution (21.4 parts of ascorbic acid relative to 100 parts of water), and the amount of water blended increases with increase in the amount of ascorbic acid blended. The solubility of ascorbic acid in water is 33.3 g at 20°C relative to 100 g of water, and water in a large amount as much as three times or more the amount of ascorbic acid needs to be blended relative to ascorbic acid. Thus, with this method, it is considered to be difficult to design fat containing ascorbic acid at a high concentration and having dispersion stability for a long period of time.

Patent Document 4 describes ethanol is used as alcohol for a substantial use in foods. However, ascorbic acid cannot be said to be easily dissolved in ethanol, and only approximately 2% is dissolved in 100 g of ethanol at room temperature (20°C). That is, with this method, it is difficult to produce fat containing ascorbic acid at a high concentration. Even if it is blended, such fat contains a large amount of alcohol, and thus use thereof is considered to be limited.

Patent Document 5 describes that the maximum content of ascorbic acid is 32.4 ppm.

As described above, in Patent Documents 1 to 5, the content of ascorbic acid in ascorbic acid-containing fat cannot be improved, and thus Patent Documents 1 to 5 cannot be adapted for a wide range of concentration.

In consideration of the conventional arts, an object of the present invention is to provide ascorbic acid-containing fat that has an improved content of ascorbic acid in ascorbic acid-containing fat, and enables use in various foods and adaptation for a wide range of concentration.

### Means for Solving the Problems

As a result of diligent research to solve the above-described problems, the present inventors have found that ascorbic acid is allowed to be stably contained at a high concentration in fat by allowing ascorbic acid to be contained in an amount of 50 to 50,000 ppm and allowing water to be contained in a specific amount relative to the amount of ascorbic acid contained, and thus completed the present invention.

That is, the present invention is
(1) a fat composition including: ascorbic acid in an amount of 50 to 50,000 ppm; and water in an amount of 0.5 to 2.0 times an amount of the ascorbic acid;
(2) the fat composition of (1), further including glycerin and/or a glycerin fatty acid ester;
(3) the fat composition of (1) or (2), where an average emulsified particle size of the fat composition is 1,000 nm or less;
(4) the fat composition of any of (1) to (3), including the ascorbic acid in an amount of 100 to 50,000 ppm;
(5) a food including the fat composition of any of (1) to (4) in an amount of 100 to 5,000 ppm;
(6) a method of producing a fat composition, the method including: mixing an oil phase and an aqueous phase to prepare a raw material; and adjusting an amount of water to an amount 0.5 to 2.0 times an amount of ascorbic acid, where the aqueous phase is an aqueous solution containing 50 to 50,000 ppm of the ascorbic acid relative to the oil phase;
(7) the method of producing a fat composition of (6), further including performing a dehydration process on the raw material prepared by mixing the oil phase and the aqueous phase;
(8) the method of producing a fat composition of (6) or (7), where the oil phase contains glycerin and/or a glycerin fatty acid ester;
(9) the method of producing a fat composition of any of (6) to (8), where an average particle size of the fat composition after an amount of the water is adjusted to an amount of 0.5 to 2.0 times an amount of the ascorbic acid is 1,000 nm or less;
(10) the method of producing a fat composition of any of (6) to (9), where the dehydration process is performed under reduced pressure; and
(11) the method of producing a fat composition of (10), further including:
   adjusting a temperature of the raw material prepared by mixing the oil phase and the aqueous phase to 50 to 130°C; and
   stirring under reduced pressure of 0.5 to 50 Torr (0.066 kPa to 6.66 kPa).

### Effects of the Invention

The present invention enables to provide ascorbic acid-containing fat that improves the content of ascorbic acid in ascorbic acid-containing fat, and enables use in various foods and adaptation for a wide range of concentration.

In a preferred aspect, ascorbic acid is stably dispersed in the fat composition of the present invention. Also, the fat composition of the present invention may be stably dispersed in foods efficiently.

In a more preferred aspect, ascorbic acid may be dispersed at a high concentration more than before, and thus the fat composition of the present invention may be used for foods with a relatively small content of fat. As a result, the effect of the ascorbate-containing fat, for example, an improvement of oxidative stability and an improvement of tastes such as salty taste may be widely enlarged in various foods.

The fat composition of the present invention contains 50 to 50,000 ppm of ascorbic acid, and water in an amount of 0.5 to 2.0 times the amount of ascorbic acid.

The fat composition of the present invention is adapted for a wide range of concentration from low concentration to high concentration. The content of ascorbic acid is preferably 50 to 40,000 ppm, more preferably, 50 to 35,000 ppm, and even more preferably 50 to 30,000 ppm.

The content of ascorbic acid is preferably 100 to 40,000 ppm, more preferably 500 to 35,000 ppm, and even more preferably 1,000 to 30,000 ppm from the viewpoint of being capable of being dispersed at a high concentration.

As described above, the solubility of ascorbic acid in water is 33.3 g at 20°C relative to 100 g of water. If ascorbic acid is not precipitated in fat, considering the solubility, water is considered to be contained in an amount greater than three times the content of ascorbic acid.

However, the fat composition of the present invention contains water only in an amount 0.5 to 2.0 times the content of ascorbic acid. Such a water content does not satisfy the solubility of ascorbic acid in water. Preferably, the fat composition of the present invention contains water in an amount 0.6 to 1.8 times the content of ascorbic acid. The content of water is more preferably 0.7 to 1.7 times the content of ascorbic acid, and even more preferably 0.8 to 1.5 times the content of ascorbic acid. By adjusting the content in such a range, the dispersion stability of ascorbic acid in fat may be improved. When the content of water is less than 0.5 times the content of ascorbic acid, ascorbic acid is crystallized and precipitates in some cases, which is not preferable. Also, when the content of water is greater than 2.0 times the content of ascorbic acid, an ascorbic acid aqueous solution precipitates in some cases, which is not preferable.

Examples of fats that may be used for the fat composition of the present invention include vegetable fats such as rapeseed oil, soybean oil, sunflower seed oil, cotton seed oil, groundnut oil, rice bran oil, corn oil, safflower oil, olive oil, kapok oil, sesame oil, evening primrose oil, palm oil, palm kernel oil, coconut oil, medium-chain triglyceride (MCT), shea butter, and sal fat; animal fats such as milk fat, beef tallow, lard, fish oil, and whale oil; and processed fat thereof such as hydrogenated oil, fractionated oil, hydrogenated fractionated oil, fractionated hydrogenated oil, and transesterified oil; and mixed fats thereof. From the viewpoint of workability, it is preferable to use fats which are liquid at normal temperature and have high oxidative stability, exemplified by for example palm olein, sunflower seed oil.

In the fat composition of the present invention, a fat-soluble emulsifier is desirably dissolved in an oil phase. The fat-soluble emulsifier is an emulsifier that may be dissolved in fat, and refers to an emulsifier having an HLB of 7 or less in the present invention. As the fat-soluble emulsifier, one or more selected from polyglycerol esters, sugar esters, sorbitan esters, and monoglycerin fatty acid esters are desirable, more desirably, polyglycerol esters, sugar esters, and distilled monoglycerides are preferred, particularly, polyglycerol esters are preferred, and polyglycerol condensed ricinoleic acid ester is most preferable among polyglycerol esters. Polyglycerol condensed ricinoleic acid ester may be abbreviated as PGPR. The amount of the fat-soluble emulsifier in the oil phase is preferably 0.1 to 10 times the amount of ascorbic acid, more preferably 0.3 to 7 times the amount of ascorbic acid, and even more preferably 0.5 to 5 times the amount of ascorbic acid. By using an appropriate amount of an appropriate emulsifier, the dispersion stability of ascorbic acid may be improved, and thereby the function of ascorbic acid-containing fat composition may be exerted. In case that the amount of the emulsifier is excessive, when the fat composition of the present invention is used for foods, decrease in eating quality due to flavor derived from the emulsifier and unintended inhibition of emulsification occur, which impairs the quality of foods.

The fat composition of the present invention preferably contains glycerin and/or a glycerin fatty acid ester. More preferably, the fat composition of the present invention has flowability at normal temperature. Even more preferably, the fat composition of the present invention does not mainly contain saturated fatty acid. By allowing glycerin and/or a glycerin fatty acid ester to be contained, ascorbic acid is allowed to be stably dispersed at a high concentration, which is preferable. In particular, when 1,000 ppm or more of ascorbic acid is contained in fat, glycerin and/or a glycerin fatty acid ester is desirably contained. Even when the content of ascorbic acid is less than 100 ppm, the glycerin and/or glycerin fatty acid ester contributes to stable dispersion.

The content of the glycerin and/or glycerin fatty acid ester is preferably 0.01 to 10 times the amount of ascorbic acid, more preferably 0.1 to 7 times the amount of ascorbic acid, and even more preferably 0.3 to 5 times the amount of ascorbic acid. A larger blended amount results in improved dispersion stability of ascorbic acid. However, excessive amount inhibits dispersion stability and causes precipitation of ascorbic acid.

An apparatus, a mixer or a stirrer, may be used for mixing an oil phase and an aqueous phase. The apparatus is not particularly limited, and an apparatus which may prevent contaminating air during mixing and stirring is preferable. A mixing and emulsifying apparatus such as a high pressure homogenizer may be exemplified.

The fat composition of the present invention preferably contains water in an amount of 0.5 to 2.0 times the amount of ascorbic acid, and is preferably adjusted such that the emulsified particle size is 1,000 nm or less. The emulsified particle size is more preferably 500 nm or less, and even more preferably 300 nm or less. By adjusting the average emulsified particle size to 1,000 nm or less, ascorbic acid may be stably dispersed at a high concentration, which is preferable. When the average emulsified particle size exceeds 1,000 nm, the dispersion stability deteriorates, which is not preferable. In the present invention, the average emulsified particle size is determined by dynamic light scattering. Also, for the case where the emulsified particle size exceeds 1,000 nm, since it is difficult to analyze the size by dynamic light scattering, the emulsified particle size is determined by a laser diffraction method.

The method of preparing a fat composition from a mixture of an oil phase and an aqueous phase that have been mixed and emulsified is not limited as long as the content of water may be adjusted to 0.5 to 2.0 times relative to 50 to 50,000 ppm of ascorbic acid in fat, and it is preferred that a dehydration process is performed.

In the present specification, the dehydration process is not limited as long as the content of water may be adjusted to a content specified in the present invention. A method may be exemplified in which water in a mixture of an oil phase and an aqueous phase that have been mixed and emulsified is distilled out with stirring, and various stirrers may be used. Examples of the stirring method include a method including using an inert gas for preventing oxidization and deterioration of fat, and distilling out water while performing bubbling agitation with the inert gas from the bottom of the container charged with a mixture of an oil phase and an aqueous phase that have been mixed and emulsified. For efficiently performing dehydration, a method of performing dehydration in a vacuum is preferable.

Examples of the method of dehydrating in a vacuum include a method including stirring under the condition of 50 to 130°C and 0.5 to 50 Torr (0.067 kPa to 6.67 kPa), and adjusting the amount of water to be 0.5 to 2.0 times the amount of ascorbic acid.

In the fat composition of the present invention, ascorbic acid may be stably dispersed. Specifically, ascorbic acid in fat is uniformly dispersed even after storage for a long period of time, and the ascorbic acid is present in a state of not being oxidized. As an indicator that ascorbic acid is stably dispersed, in the present invention, the content of ascorbic acid is analyzed and evaluated. Specifically, after storage, the ascorbic acid-containing fat composition is subjected to centrifugation under the condition of 2,000 G × 10 minutes, and the ascorbic acid content in the supernatant is measured, and this is used as an indicator for stable dispersion.

The fat composition of the present invention has an effect of enhancing the amount of taste itself, and further has an effect of reinforcing a rise of expression of taste, or persistence of taste without modifying original tastes such as salty taste, sour taste, pungent taste, and umami of food materials containing, particularly, taste materials, such as salty taste materials, sour taste materials, pungent taste materials, and umami materials which are characteristics of the ascorbic acid-containing fat composition. By improving dispersibility, this effect is kept high. In the present invention, a taste enhancing fat having a predetermined content of ascorbic acid is prepared using an ascorbic acid-containing fat composition, and then evaluation is performed using an effect of enhancing salty taste as an indicator.

The fat composition of the present invention contains ascorbic acid and has favorable dispersion stability, and may exhibit favorable oxidative stability. For the effect related to the oxidative stability of the fat composition according to the present invention, a predetermined determination indicator may be obtained by a CDM test. Here, the Conductmetric Determination Method (CDM) may be used as an indicator for evaluation of oxidative stability of fat. A greater measurement value of the CDM indicates excellent oxidative stability. The CDM test may be performed using a dedicated test instrument (Rancimat). The specific measurement method of this method is also described in Examples. All the measurement methods are an acceleration test performed at a higher temperature than presumed use aspect.

The fat composition of the present invention may be adapted for a wide range of concentration and thus may be used for various foods. Examples of the food include seasonings such as dressing and mayonnaise, taste fillings and spreads such as pizza sauce, margarine and shortening, cooked foods such as retort curry, roux such as stew and curry, frozen foods such as fried chicken, dressed breads, processed meats such as sausage, fish pastes such as hanpen or foods prepared by cooking these products, rice confectioneries such as fried rice crackers, snack foods such as potato chips, corn snacks, and pretzels, frozen desserts, ice mix, and other confectioneries and Japanese confectioneries in which taste may be felt.

In a preferred aspect, the fat composition of the present invention may also be used for sauces, soups, beverages, fat for preventing sticking of cooked rice, ice creams which have a small content of fat and are limited in their use.

Further, ascorbic acid may be efficiently stably dispersed in fat itself with a small amount of addition of the fat composition of the present invention, and the fat composition of the present invention may be used as a formulation of ascorbic acid with a high concentration. Since a special dispersion apparatus is not necessary for such use, fat containing ascorbic acid may be obtained as a formulation in various use of fat by adding the fat composition of the present invention.

### Examples

Hereinafter, the present invention will be described in more detail by way of Examples, but the spirit of the present invention is not limited by the following Examples. In Examples, % and part are based on weight.

### (Preparation method)

An oil phase part was prepared in accordance with the formulation described in the column of the oil phase in Table 1. Similarly, an aqueous phase part was prepared in accordance with the formulation described in the column of the aqueous phase in Table 1.

The temperature of the oil phase part was set to be 25°C, and the aqueous phase part was blended while stirring by HOMOMIXER (TK homomixer MARKII: available from PRIMIX Corporation) at 8,000 rpm. Stirring was performed in this state for 10 minutes. Then, a dehydration process was performed with stirring at 60°C under reduced pressure of 30 Torr (4.0 kPa) to prepare an ascorbic acid-containing fat composition.

Table 2 shows the constitution after the dehydration process as the final formulation.

In Table 3, the water ratio of water relative to ascorbic acid (water/ascorbic acid) was calculated and described along with the concentration of the ascorbic acid aqueous solution.

### (Raw materials and additives)

- As fat, "refined rapeseed oil" and palm olein "Palm Ace N", available from Fuji Oil Co., Ltd., were used.
- As an oil-soluble emulsifier, polyglycerol condensed ricinoleic acid ester "CRS-75", available from Sakamoto Yakuhin kogyo Co., Ltd. was used.
- As ascorbic acid, trade name: L-ascorbic acid, available from Wako Pure Chemical Industries, Ltd., (purity: 99.5%) was used.
- As glycerin, "glycerin food additive", available from Kishida Chemical Co., Ltd. was used.
- As a water-soluble emulsifier, decaglycerin monooleic acid ester "Poem J-0381V", available from Riken Vitamin Co., Ltd. (HLB = 14.0) was used.

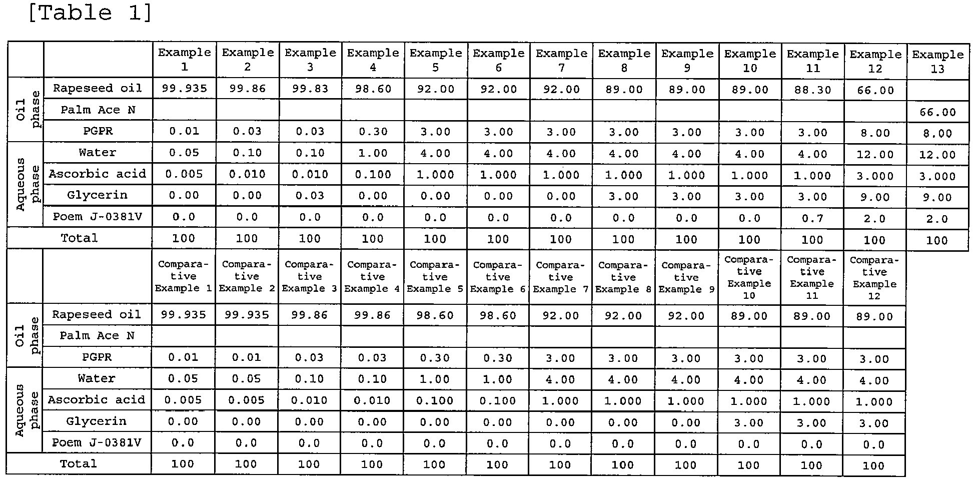

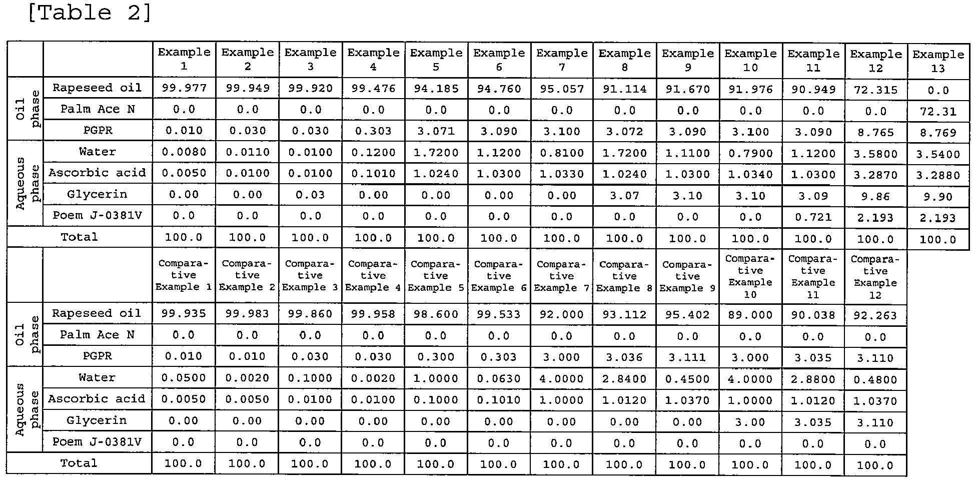

**[Table 3]**

| | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|
| Water ppm | 83 | 110 | 100 | 1200 | 17200 | 11200 | 8100 | 17200 | 11200 | 7900 | 11200 | 35800 | 35400 |
| Ascorbic acid ppm | 50 | 100 | 100 | 1009 | 10238 | 10300 | 10332 | 10238 | 10300 | 10334 | 10300 | 32870 | 32884 |
| Water ratio relative to ascorbic acid | 1.66 | 1.10 | 1.00 | 1.19 | 1.68 | 1.09 | 0.78 | 1.68 | 1.09 | 0.76 | 1.09 | 1.09 | 1.08 |
| Ascorbic acid aqueous solution concentration % | 37.6 | 47.6 | 50.0 | 45.7 | 37.3 | 47.9 | 56.1 | 37.3 | 47.9 | 56.7 | 47.9 | 47.9 | 48.2 |

| | Comparative Example 1 | Comparative Example 2 | Comparative Example 3 | Comparative Example 4 | Comparative Example 5 | Comparative Example 6 | Comparative Example 7 | Comparative Example 8 | Compara - tive Example 9 | Compara - tive Example 10 | Comparative Example 11 | Comparative Example 12 | |
|---|---|---|---|---|---|---|---|---|---|---|---|---|---|
| Water ppm | 500 | 22 | 1000 | 20 | 10000 | 630 | 40000 | 28400 | 4500 | 40000 | 28800 | 4800 | |
| Ascorbic acid ppm | 50 | 50 | 100 | 100 | 1000 | 1009 | 10000 | 10121 | 10370 | 10000 | 10117 | 10367 | |
| Water ratio relative to ascorbic acid | 10.00 | 0.44 | 10.00 | 0.20 | 10.00 | 0.62 | 4.00 | 2.81 | 0.43 | 4.00 | 2.85 | 0.46 | |
| Ascorbic acid aqueous solution concentration % | 9.1 | 69.5 | 9.1 | 83.3 | 9.1 | 61.6 | 20.0 | 26.3 | 69.7 | 20.0 | 26.0 | 68.4 | |

Table 3 shows that, in Examples 1 to 13, the concentration (%) of ascorbic acid in the prepared fat composition was greater than the solubility at 20°C of ascorbic acid in water (33.3 g relative to 100 g of water).

Next, the prepared fat compositions were evaluated.

### (Average emulsified particle size)

The average emulsified particle size was determined by dynamic light scattering. Also, for those having an emulsified particle size greater than 1,000 nm, the emulsified particle size was determined by a laser diffraction method. Table 4 shows the evaluation results.

### (Oxidative stability evaluation of ascorbic acid-containing fat composition)

A CDM value was determined and evaluated by a CDM value in accordance with "the stability test" of the CDM test of the method of the JOCS Standard Methods for the Analysis of Fats and Oils (2.5.1.2-1996) (definition: a clean air is supplied while a sample is heated at 120°C in a reactor; a volatile decomposition product generated by oxidization is collected in water; and time until the inflection point where the conductivity of water changes rapidly is the CDM value).

Table 4 shows the evaluation results.

### (Quantitative determination method of ascorbic acid)

An ascorbic acid-containing fat composition is diluted with rapeseed oil such that the ascorbic acid content is approximately 100 ppm, and the resultant is used as a measurement sample.

The measurement sample is placed in a sealable container, and a 10% metaphosphoric acid aqueous solution in an equivalent amount of the measurement sample and hexane in an amount of 2 times the amount of the measurement sample is further added, and the mixture is stirred by shaking.

After leaving the mixture to stand, an absorbance at 246 nm of the aqueous phase part is measured.

An absorbance at 246 nm of a known amount of ascorbic acid aqueous solution is separately measured to create a calibration curve, and this calibration curve is used for quantitative determination of the measurement sample.

A value obtained by multiplying the concentration of ascorbic acid of the measurement sample by the dilution ratio is defined as the ascorbic acid content of the ascorbic acid-containing fat composition.

### (Storage test method of ascorbic acid-containing fat composition)

- Ninety one gram of ascorbic acid-containing fat composition is placed in a 100 ml glass bottle and sealed.
- The glass bottle is stored in a dark place at 25°C for 180 days.
- The ascorbic acid content after storage is measured.
- The remaining rate in ascorbic acid storage (%) = the ascorbic acid content after storage/the ascorbic acid content after preparation
- The presence or absence of precipitation is checked after storage, and the case of including no precipitation is denoted as "good", and the case of including precipitation is denoted as "poor".
- After storage, the ascorbic acid-containing fat composition is subjected to centrifugation under the condition of 2,000 G × 10 minutes, and the ascorbic acid content in the supernatant is measured.
- The remaining rate of ascorbic acid in the supernatant (%) = the ascorbic acid content in the supernatant after storage/the ascorbic acid content for the entire ascorbic acid-containing fat composition after storage is evaluated, and the case of remaining 80% or more is evaluated as being good.

Table 4 shows the evaluation results.

**[Table 4]**

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Average particle size nm | | | 351.1 | 343.4 | 249.2 | 388.2 | 373.1 | 351.2 | 382.8 | 294.2 | 269.6 | 288.2 | 284.1 |
| CDM value | | | 7.2 | 9.1 | 9.4 | 16.3 | 28.4 | 27.3 | 29.2 | 30.3 | 30.5 | 31.3 | 30.5 |
| Ascorbic acid ppm | | | 49.6 | 99.3 | 99.8 | 999.8 | 10237.5 | 10289.7 | 10322.0 | 10165.8 | 10217.6 | 10334.4 | 10238.2 |
| Ascorbic acid after storage ppm | | | 48.9 | 96.8 | 98.9 | 987.7 | 9889.4 | 10021.9 | 10032.7 | 10002.0 | 10094.0 | 10065.7 | 10052.8 |
| Remaining rate at storage | | | 98.6 | 97.5 | 99.1 | 98.8 | 96.6 | 97.4 | 97.2 | 98.4 | 98.8 | 97.4 | 98.2 |
| Ascorbic acid in supernatant ppm | | | 40.6 | 81.7 | 91.9 | 819.8 | 8229.1 | 8300.3 | 8239.8 | 9331.9 | 9528.7 | 9441. 6 | 9992.5 |
| Remaining rate in supernatant | | | 83.1 | 84.4 | 92.9 | 83.0 | 83.2 | 82.8 | 82.1 | 93.3 | 94.4 | 93.8 | 99.4 |
| Presence of precipitation | | | Good | Good | Good | Good | Good | Good | Good | Good | Good | Good | Good |
| Overall determination | | | Good | Good | Good | Good | Good | Good | Good | Good | Good | Good | Good |

| Example 12 | Example 13 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|
| 273.4 | 211.1 | 465.2 | 1129.4 | 389.3 | 1324.2 | 503.1 | 1274.3 | 582.1 | 561.4 | 1587.2 | 513.1 | 492.4 | 462.3 |
| 40.8 | 55.7 | 5.7 | 5.8 | 6.3 | 6.5 | 8.3 | 5.5 | 16.3 | 18.5 | 8.1 | 17.2 | 19.1 | 9.5 |
| 32541. 8 | 32588.1 | 49.9 | 50.0 | 99.8 | 99.7 | 997.0 | 1007.5 | 9940.0 | 10100.6 | 10266.1 | 9900.0 | 10025.6 | 10314.8 |
| 32081. 6 | 32555.3 | 47.7 | 49.4 | 95.5 | 97.3 | 967.0 | 984.2 | 9650.0 | 9705.9 | 10286.8 | 9690.0 | 9772.7 | 10169.7 |
| 98.6 | 99.9 | 95.6 | 98.8 | 95.7 | 97.6 | 97.0 | 97.7 | 97.1 | 96.1 | 100.2 | 97.9 | 97.5 | 98.6 |
| 31632.4 | 32164.6 | 10.6 | 9.0 | 17.4 | 19.7 | 142.5 | 25.6 | 983.5 | 2227.4 | 52.1 | 23450.0 | 3254.3 | 166.2 |
| 98.6 | 98.8 | 22.2 | 18.1 | 18.2 | 20.2 | 14.7 | 2.6 | 10.2 | 22.9 | 0.5 | 24.2 | 33.3 | 1.6 |
| Good | Good | Poor | Poor | Poor | Poor | Poor | Poor | Poor | Poor | Poor | Poor | Poor | Poor |
| Good | Good | Poor | Poor | Poor | Poor | Poor | Poor | Poor | Poor | Poor | Poor | Poor | Poor |

### (Evaluation result)

In the fat compositions of Examples 1 to 13, precipitation was not observed before and after storage, the remaining rate of the ascorbic acid in the supernatant was greater than 80%, and the dispersion stability after storage was good. On the contrary, the fat compositions in which water is not adjusted to 0.5 to 2.0 times the amount of ascorbic acid, such as the fat composition of Comparative Example 7, which is similar to Patent Document 3, exhibited poor dispersion stability after storage.

### (Evaluation of taste enhancing effect of ascorbic acid-containing fat composition)

Using the ascorbic acid content after storage as a reference, the ascorbic acid-containing fat composition after storage and rapeseed oil are mixed in accordance with the blending ratio (%) in Table 5 such that the ascorbic acid content is 5 ppm, thus preparing a taste enhancing fat.

### (Production method of non-fried potato chips and evaluation method of taste enhancing fat)

Potatoes (Irish Cobbler potato produced in Hokkaido) were used. Each potato was sliced into 2 mm thick, and soaked in a 3% brine overnight. Moisture was wiped off with paper towel, and then moisture was removed by a microwave oven to prepare dried potato chips.

Subsequently, 20 parts of taste enhancing fat was sprayed on 80 parts of the dried potato chips to prepare non-fried potato chips. Sensory evaluation was performed by 4 panelists, and the case where a strong salty taste was felt as compared to rapeseed oil used section (non-added section) was evaluated as "good" and the case where salty taste was felt equal or less than the rapeseed oil used section was evaluated as "poor".

Table 5 shows the evaluation results.

**[Table 5]**

| Blending ratio % | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|
| Rapeseed oil | 89.775 | 94.835 | 94.944 | 94.494 | 99.949 | 99.950 | 99.950 | 99.950 | 99.950 | 99.950 | 99.950 | 99.984 | 99.985 |
| Ascorbic acid-containing fat composition after storage | 10.225 | 5.165 | 5.056 | 0.506 | 0.051 | 0.050 | 0.050 | 0.050 | 0.050 | 0.050 | 0.050 | 0.016 | 0.015 |
| Taste enhancing effect | Good | Good | Good | Good | Good | Good | Good | Good | Good | Good | Good | Good | Good |

| Blending ratio % | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | |
|---|---|---|---|---|---|---|---|---|---|---|---|---|---|
| Rapeseed oil | 89.518 | 89.879 | 94.764 | 94.861 | 99.483 | 99.492 | 99.948 | 99.948 | 99.951 | 99.948 | 99.949 | 99.951 | |
| Ascorbic acid-containing fat composition after storage | 10.482 | 10.121 | 5.236 | 5.139 | 0.517 | 0.508 | 0.052 | 0.052 | 0.049 | 0.052 | 0.051 | 0.049 | |
| Taste enhancing effect | Poor | Poor | Poor | Poor | Poor | Poor | Poor | Poor | Poor | Poor | Poor | Poor | |

### (Evaluation result of taste enhancing effect)

The fat compositions of Examples 1 to 13 had a taste enhancing effect.

### (Evaluation of oxidative stability when ascorbic acid-containing fat composition is diluted)

Using the ascorbic acid content after storage as a reference, the ascorbic acid-containing fat composition after storage and rapeseed oil are mixed in accordance with the blended amount described in Table 6 such that the ascorbic acid content is 90 ppm to prepare a rapeseed oil preparation.
- Fifty gram of rapeseed oil preparation is placed in a 100 ml glass bottle and sealed.
- The glass bottle is stored in a dark place at 60°C for 14 days.
- After storage, measurement of peroxide value (POV) and flavor evaluation is performed. An evaluation item for flavor is determined to be a deterioration odor of fat, and sensory evaluation was performed in 10 stages by 4 panelists.

A fat showing evaluations as 6 or more was determined as good.

A fat deterioration odor: a larger number indicates weaker deterioration odor and a smaller number indicates stronger deterioration odor.
- The CDM value at 120°C was measured before storage. A CDM value of 8 hr or more is determined to be passed.

Table 6 shows the evaluation results.

**[Table 6]**

| | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|
| Rapeseed oil | | 7.0 | 9.0 | 90.9 | 99.1 | 99.1 | 99.1 | 99.1 | 99.1 | 99.1 | 99.1 | 99.7 | 99.7 |
| Ascorbic acid-containing fat composition after storage | - | 93.0 | 91.0 | 9.1 | 0.9 | 0.9 | 0.9 | 0.9 | 0.9 | 0.9 | 0.9 | 0.3 | 0.3 |
| CDM 120°C (non-added 5.1 hr) | | 9.1 | 9.5 | 9.0 | 9.2 | 9.3 | 9.3 | 9.1 | 9.5 | 9.4 | 9.4 | 9.4 | 9.4 |
| POV After storage at 60°C for 14 days | | 4.0 | 3.2 | 3.7 | 4.5 | 3.6 | 4.4 | 3.2 | 2.8 | 3.5 | 1.3 | 1.4 | 0.9 |
| Odor after storage | - | 6.00 | 7.00 | 6.00 | 6.00 | 6.00 | 6.00 | 7.00 | 7.00 | 7.00 | 8.00 | 8.00 | 8.00 |

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | |
|---|---|---|---|---|---|---|---|---|---|---|---|---|---|
| Rapeseed oil | | | 5.8 | 7.5 | 90.7 | 90.9 | 99.1 | 99.1 | 99.1 | 99.1 | 99.1 | 99.1 | |
| Ascorbic acid-containing fat composition after storage | - | | 94.2 | 92.5 | 9.3 | 9.1 | 0.9 | 0.9 | 0.9 | 0.9 | 0.9 | 0.9 | |
| CDM 120°C (non-added 5.1 hr) | - | - | 5.9 | 6.1 | 5.9 | 5.2 | 5.8 | 6.6 | 5.1 | 6.6 | 7.0 | 5.2 | |
| POV After storage at 60°C for 14 days | - | | 27.5 | 27.4 | 26.5 | 30.6 | 29.5 | 23.5 | 31.2 | 24.9 | 22.3 | 30.5 | |
| Odor after storage | - | - | 1.00 | 2.00 | 1.00 | 2.00 | 1.00 | 2.00 | 3.00 | 2.00 | 3.00 | 4.00 | |

### (Evaluation result)

- The rapeseed oil preparation prepared by diluting the fat composition of the present invention exhibited favorable oxidative stability.

The evaluation results reveal that the fat composition of the present invention may be adapted for a wide range of concentration.

Accordingly, even in foods having various fat contents, foods containing ascorbic acid and having improved oxidative stability, or taste-enhanced foods may be obtained by adding the fat composition of the present invention in which the range of concentration of ascorbic acid has been appropriately prepared.

### Industrial Applicability

The present invention enables to provide ascorbic acid-containing fat that has an improved content of ascorbic acid in ascorbic acid-containing fat, and enables use in various foods and adaptation for a wide range of concentration.

## Claims

1. A fat composition comprising: ascorbic acid in an amount of 50 to 50,000 ppm; and water in an amount of 0.5 to 2.0 times an amount of the ascorbic acid.

2. The fat composition according to claim 1, further comprising glycerin and/or a glycerin fatty acid ester.

3. The fat composition according to claim 1 or 2, wherein an average emulsified particle size of the fat composition is 1,000 nm or less.

4. The fat composition according to any one of claims 1 to 3, comprising the ascorbic acid in an amount of 100 to 50,000 ppm.

5. A food comprising the fat composition according to any one of claims 1 to 4 in an amount of 100 to 5,000 ppm.

6. A method of producing a fat composition, the method comprising: mixing an oil phase and an aqueous phase to prepare a raw material; and adjusting an amount of water to an amount 0.5 to 2.0 times an amount of ascorbic acid,
wherein the aqueous phase is an aqueous solution containing 50 to 50,000 ppm of the ascorbic acid relative to the oil phase.

7. The method of producing a fat composition according to claim 6, further comprising performing a dehydration process on the raw material prepared by mixing the oil phase and the aqueous phase.

8. The method of producing a fat composition according to claim 6 or 7, wherein the oil phase contains glycerin and/or a glycerin fatty acid ester.

9. The method of producing a fat composition according to any one of claims 6 to 8, wherein an average particle size of the fat composition after an amount of the water is adjusted to an amount of 0.5 to 2.0 times an amount of the ascorbic acid is 1,000 nm or less.

10. The method of producing a fat composition according to any one of claims 6 to 9, wherein the dehydration process is performed under reduced pressure.

11. The method of producing a fat composition according to claim 10, further comprising: adjusting a temperature of the raw material prepared by mixing the oil phase and the aqueous phase to 50 to 130°C; and stirring under reduced pressure of 0.5 to 50 Torr (0.066 kPa to 6.66 kPa) .
